# EUROPEAN PATENT APPLICATION

(11) **EP 1 814 323 A2**
(43) Date of publication of application: **01.08.2007**
(21) Application number: 06124456.2
(22) Date of filing: 21.11.2006
(51) Int. Cl.: H04N 5/44

(54) **An image signal scan-converting function and scan-converting method thereof**

(30) Priority: 27.01.2006 KR 20060008818
(71) Applicant: SAMSUNG ELECTRONICS CO., LTD., Suwon-City, Kyungki-do (KR)
(72) Inventor: Kim, Hak-je, Gwonseon-gu, Suwon-si, Gyeonggi-do (KR)
(74) Representative: Perkins, Dawn Elizabeth

(57) **Abstract**

An image signal scan-converting method and apparatus are disclosed. A progressive scan photographing unit receives an optical signal and outputs a progressive scan signal, converting the optical signal into an electrical signal. A first storing unit stores odd pixels of the progressive scan signal, a second storing unit stores even pixels of the progressive scan signal, and an adding unit adds the odd pixels and the even pixels read from the first and the second storing units to form an odd field and an even field, thus producing an interlaced scan signal. Accordingly, image signals formatted according to a progressive scan method are converted into image signals of an interlaced scan type, thereby allowing an image signal apparatus to be compatible with interlaced scan type processing apparatuses and improving image quality in other progressive scan type processing apparatuses.

## Description

The present invention relates generally to a monitoring camera, such as a closed-circuit television (CCTV) camera, and a scan-converting method thereof. More particularly, the present invention relates to a monitoring camera having a scan-converting function and a scan-converting method thereof wherein image signals photographed in a progressive scan method are converted into image signals of an interlaced scan type, thereby allowing compatibility with other interlaced scan type processing apparatuses and improving image quality in other progressive scan type processing apparatuses.

Methods of displaying image signals include progressive scan and interlaced scan methods. The progressive scan method is a method used with computer monitors, digital televisions (TV), and digital video recorders (DVR), among others, and displays entire frames at once using a single image frame as a frame unit, such as when an image of film is projected on a screen.

On the other hand, the interlaced scan method is a method used with general TV and monitoring cameras, among others, and divides a single image frame into two fields and then displays the divided fields, in turn, on a screen when a single image is displayed. The interlaced scan method outputs scanning lines, for example, 525 scanning lines in case of national television systems committee (NTSC) and 625 scanning lines in case of phase alternate line (PAL), so that even and odd scanning lines are outputted by turns at intervals of 1/60 second. Each picture outputted by even or odd scanning lines at intervals of 1/60 second is called a field, and two united fields is called a frame.

As the number of image display apparatuses using the progressive scan method increases and data exchange between apparatuses of using different scan methods becomes prevalent, it is necessary to convert progressive scan image signals into interlaced scan image signals.

In the interlaced scan method, however, a single frame is formed uniting two fields. Accordingly, if there is movement of a subject between the two fields, the single frame is formed uniting two fields, that is, two pictures, each of which is formed at a different point of time. Thus, an image is provided in which noise is formed at the contour.

Exemplary embodiments of the present invention address at least the above problems and disadvantages and provide at least the advantages described below. Accordingly, exemplary embodiments of the present invention provide a monitoring camera having a scan-converting function and a scan-converting method thereof wherein image signals photographed in a progressive scan method are converted into image signals of an interlaced scan type, thereby allowing compatibility with other interlaced scan type processing apparatuses and improving image quality in other progressive scan type processing apparatuses.

Exemplary embodiments of the present invention provide a monitoring camera for photographing a subject and outputting image signals. The camera includes a progressive scan photographing unit for receiving optical signals from a subject and outputting progressive scan signals converting the optical signals into electrical signals. The camera further includes a first storing unit for storing odd pixels of the progressive scan signals, a second storing unit for storing even pixels of the progressive scan signals, and an adding unit for adding the odd pixels and the even pixels read from the first and the second storing units to form an odd field and an even field, thus producing interlaced scan signals.

In an exemplary implementation, when forming the odd field, the adding unit can read the odd pixels of the first storing unit prior to the even pixels of the second storing unit, and then repeat the process of adding the even pixels to the odd pixels, respectively, to the last odd pixel of the first storing unit. When forming the even field, the adding unit can read the even pixels of the second storing unit prior to the odd pixels of the first storing unit and then repeat the process of adding the odd pixels to the even pixels, respectively, to the last even pixel of the second storing unit.

Exemplary embodiments of the camera may further include a control unit for generating at least one of a timing signal and a synchronizing signal for controlling the progressive scan photographing unit.

Exemplary embodiments of the present invention provide a scan-converting method of a monitoring camera for photographing a subject and outputting image signals. The scan-converting method includes storing odd pixels of photographed progressive scan image signals, storing even pixels of the photographed progressive scan image signals, and adding the odd pixels and even pixels to form an odd field and an even field to produce interlaced scan signals.

In an exemplary implementation, when forming the odd field, adding the odd pixels and even pixels can include reading the stored odd pixels prior to the stored even pixels, then repeating the process of adding the even pixels to the odd pixels, respectively, until the last stored odd pixel. When forming the even field, adding the odd pixels and even pixels can include reading the stored even pixels prior to the stored odd pixels and then repeating the process of adding the odd pixels to the even pixels, respectively, until the last stored even pixel.

Exemplary embodiments of the method may further include generating at least one of a timing signal and a synchronizing signal for controlling the monitoring camera.

Exemplary embodiments of the present invention provide a scan-converting apparatus for use in a monitoring camera for photographing a subject and outputting image signals. The scan-converting apparatus includes a first storing unit for storing odd pixels of photographed progressive scan signals, a second storing unit for storing even pixels of the photographed progressive scan signals, and an adding unit for adding the odd pixels and the even pixels read from the first and the second storing units to form an odd field and an even field, thus producing interlaced scan signals.

In an exemplary implementation, when forming the odd field, the adding unit can read the odd pixels of the first storing unit prior to the even pixels of the second storing unit, then repeat the process of adding the even pixels to the odd pixels, respectively, to the last odd pixel of the first storing unit. When forming the even field, the adding unit can read the even pixels of the second storing unit prior to the odd pixels of the first storing unit, then repeat the process of adding the odd pixels to the even pixels, respectively, to the last even pixel of the second storing unit.

In an exemplary implementation, the camera can further include a control unit to generate at least one of a timing signal and a synchronizing signal for controlling the monitoring camera.

The above and other exemplary features of the present invention will become more apparent from the following detailed description of certain exemplary embodiments thereof when taken in conjunction with the accompanying drawings, in which:
Figure 1 is a block diagram exemplifying a monitoring camera according to an exemplary embodiment of the present invention;
Figure 2 is a view exemplifying electric charges accumulated in a progressive scan CCD of the monitoring camera according to an exemplary embodiment of the present invention;
Figure 3A is a view exemplifying image signals stored in a first storing unit and a second storing unit of the monitoring camera according to an exemplary embodiment of the present invention;
Figure 3B is a view exemplifying a method of forming an odd field and an even field in an interlaced scan converting unit of the monitoring camera according to an exemplary embodiment of the present invention;
Figure 4 is a flow chart exemplifying a scan-converting method of the monitoring camera according to an exemplary embodiment of the present invention; and
Figures 5A and 5B are views exemplifying a method of forming an odd field and an even field in the progressive scan CCD of the monitoring camera according to an exemplary embodiment of the present invention.

Throughout the drawings, like drawing reference numerals should be understood to refer to like elements, features, and structures.

The matters exemplified in this description are provided to assist in a comprehensive understanding of various exemplary embodiments of the present invention disclosed with reference to the accompanying figures. Accordingly, those of ordinary skill in the art will recognize that various changes and modifications of the embodiments described herein can be made without departing from the scope and spirit of the invention claimed invention. Also, descriptions of well-known functions and constructions are omitted for clarity and conciseness.

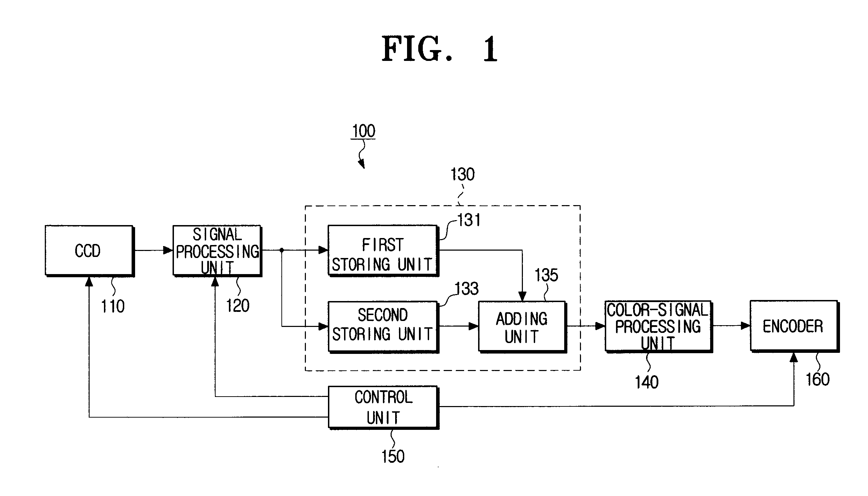

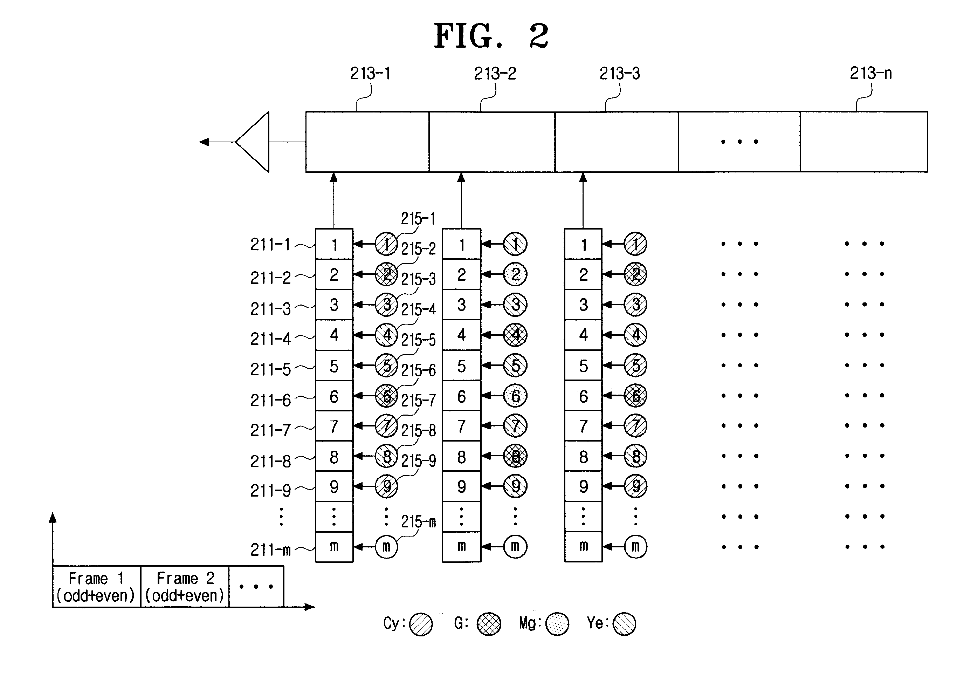

Figure 1 is a block diagram exemplifying an image signal apparatus, such as a camera, according to an exemplary embodiment of the present invention, and Figure 2 is a view exemplifying electric charges accumulated in a progressive scan CCD of the monitoring camera according to an exemplary embodiment of the present invention. Referring to Figures 1 and 2, an image signal apparatus 100, such as a camera, according to exemplary embodiments of the present invention, includes a charged coupled device (CCD) 110, a signal processing unit 120, an interlaced scan converting unit 130, a color-signal processing unit 140, a control unit 150, and an encoder 160.

The CCD 110 is provided with a photographing part in which a plurality of photodiodes or photo transistors (TR) are arranged in the shape of lattice, and outputs electric charges as electric signals. The electric charges are accumulated in the respective photodiodes or photo transistors (TR) when they receive optical signals, such as light. That is, the CCD 110 receives optical signals from an external subject to be photographed through a lens (not illustrated), and converts the optical signals received from the subject into electric signals. The CCD 110, which is a progressive scan CCD, includes vertical CCDs 211-1 through 211-m, and horizontal CCDs 213-1 through 213-n. The electric charges, that is, progressive scan image signals 215-1 through 215-m accumulated in the CCD 110 are the same as illustrated in Figure 2.

The signal processing unit 120 carries out processes, such as correlated double sampling (CDS), gain control amplification and analog-to-digital (A/D) conversion, on electric signals received from the CCD 110. Namely, the signal processing unit 120 correlated-double-samples the received electric signals to remove noise. And the signal processing unit 120 amplifies the noise-removed signals with a certain gain, and then converts the amplified signals into digital signals.

The interlaced scan converting unit 130 converts the received electric signals, that is, the progressive scan image signals into interlaced scan image signals and includes a first storing unit 131, a second storing unit 133, and an adding unit 135.

The first storing unit 131 stores odd pixels 215-1 through 215-(2t-1) (t= 1-m) of the progressive scan image signals processed as described above by the signal processing unit 120.

The second storing unit 133 stores even pixels 215-2 through 215-2t (t=1-m) of the progressive scan image signals processed as described above by the signal processing unit 120. The even and odd pixels of the progressive scan image signal can be obtained in a manner known to those of ordinary skill in the art, for example, demultiplexing, deinterlacing, decomposing, and so on.

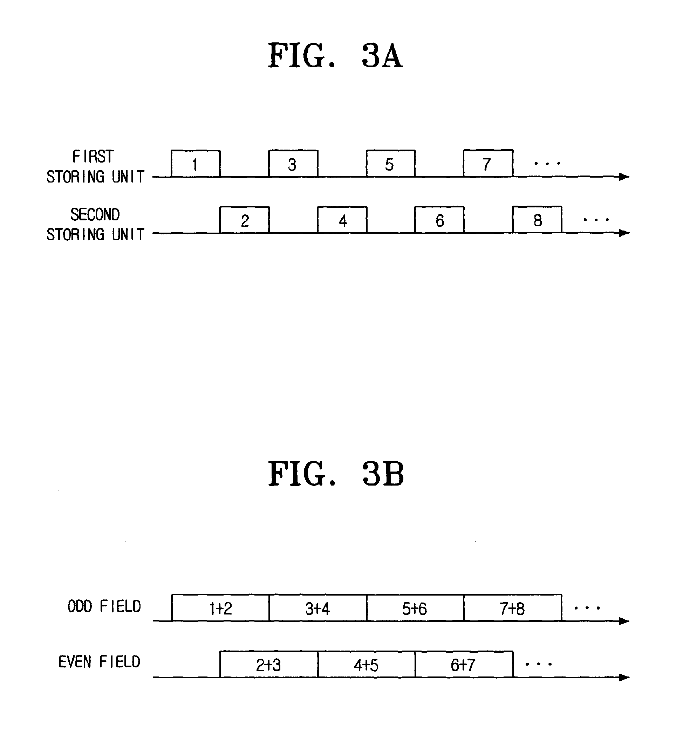

That is, referring to Figures 2 and 3A, the first storing unit 131 stores odd pixels 215-1 through 215-(2t-1) (t=1-m) of the first through m-th progressive scan image signals 215-1 through 215-m, and the second storing unit 133 stores even pixels 215-2 through 215-2t (t=1-m) of the first through m-th progressive scan image signals 215-1 through 215-m.

The adding unit 135 adds the odd pixels and the even pixels read from the first and the second storing unit 131 and 133 to form an odd field and an even field, thereby producing interlaced scan image signals.

Referring to Figure 3B, the adding unit 135 adds the beginning odd pixel "1" stored in the first storing unit 131 and an even pixel "2" stored in the second storing unit 133. The adding unit 135 then repeats the process of reading the odd pixels and the even pixels stored in the first and the second storing units 131 and 133, respectively, adding the even pixels to the odd pixels, thereby forming an odd field. In the same manner, the adding unit 135 adds the beginning even pixel "2" stored in the second storing unit 133 and an odd pixel "3" stored in the first storing unit 131. The adding unit 135 then repeats the process of reading the even pixels and the odd pixels stored in the second and the first storing units 133 and 131, respectively, adding the odd pixels to the even pixels, thereby forming an even field.

The color-signal processing unit 140 breaks up (for example, decompose) color signals from the received interlaced scan image signals, and carries out a process of improving color reproduction characteristics of the received interlaced scan image signals. That is, the color-signal processing unit 140 breaks up color difference signals and luminance signals from the received interlaced scan image signals on the basis of color information included in the progressive scan image signals 215-1 through 215-m, which is obtained by a complementary color filter.

The control unit 150 generates timing signals and synchronizing signals for controlling general operations of the monitoring camera 100.

The encoder 160 unites the color difference signals and luminance signals received from the color-signal processing unit 140 with the synchronizing signals received from the control unit 150, so that it produces and outputs composite image signals that meet an appropriate imaging standard. The imaging standard comprises an imaging norm, which is provided by standards such as national television system committee (NTSC), phase alternating line (PAL), high definition (HD), standard definition (SD), and so on. The composite signal can be formed in a manner known to those of ordinary skill in the art, for example, multiplexing, interlacing, and so on.

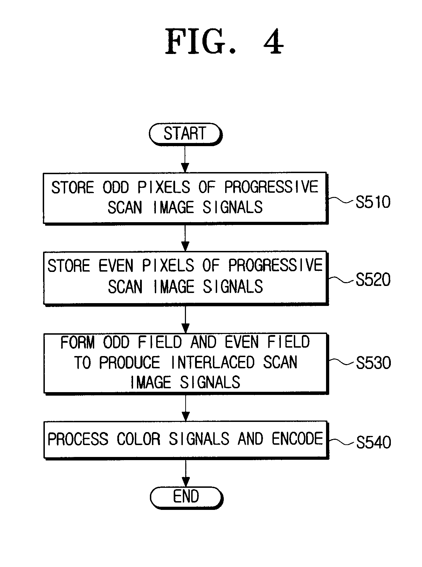

Figure 4 is a flow chart exemplifying a scan-converting method of an image signal apparatus, such as a camera, according to exemplary embodiments of the present invention. Referring to Figure 4, the first storing unit 131 stores odd pixels 215-1 through 215-(2t-1) (t=1-m) of progressive scan image signals, step S510.

Next, the second storing unit 133 stores even pixels 215-2 through 215-2t (t=1-m) of progressive scan image signals, step S520. Namely, referring to Figure 3A, the first storing unit 131 stores odd pixels 215-1 through 215-2t-1 (t=1-m) of first through m-th progressive scan image signals 215-1 through 215-m, and the second storing unit 133 stores even pixels 215-2 through 215-2t (t=1-m) of the first through m-th progressive scan image signals 215-1 through 215-m.

The adding unit 135 then adds the odd pixels and the even pixels read from the first and the second storing unit 131 and 133 to form an odd field and an even field, thus producing interlaced scan image signals, step S530.

Referring to Figure 3B, the adding unit 135 adds the beginning odd pixel "1" stored in the first storing unit 131 and an even pixel "2" stored in the second storing unit 133, then repeats the process of adding the odd pixels and the even pixels stored in the first and the second storing units 131 and 133, respectively, to the last odd pixel"2t-1(t=1-m)". In the same manner, the adding unit 135 adds the beginning even pixel "2" stored in the second storing unit 133 and an odd pixel "3" stored in the first storing unit 131, then repeats the process of reading the even pixels and the odd pixels stored in the second and the first storing units 133 and 131, respectively, to the last even pixel "2t(t=1-m)".

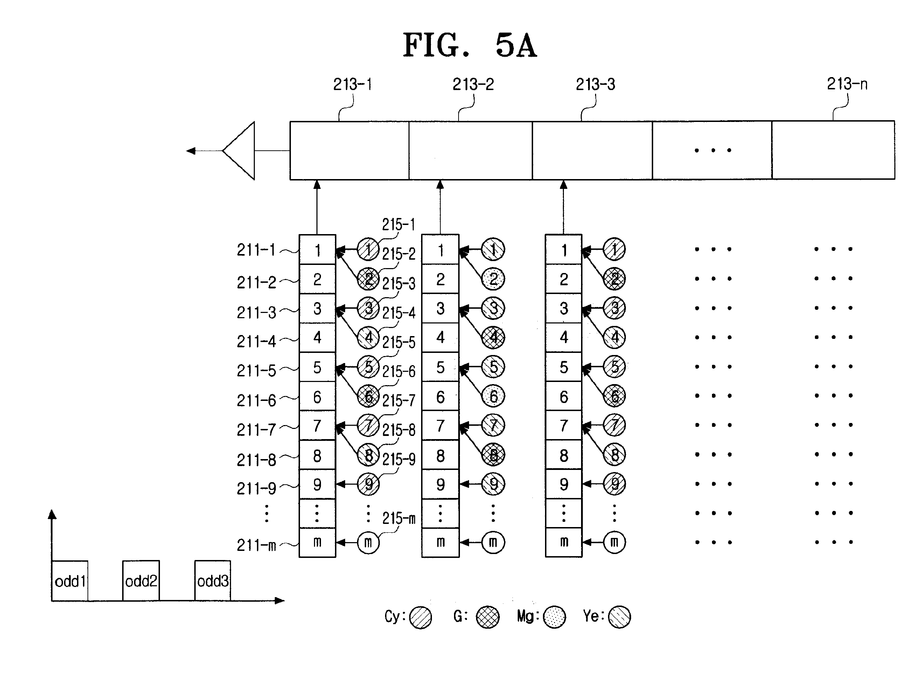

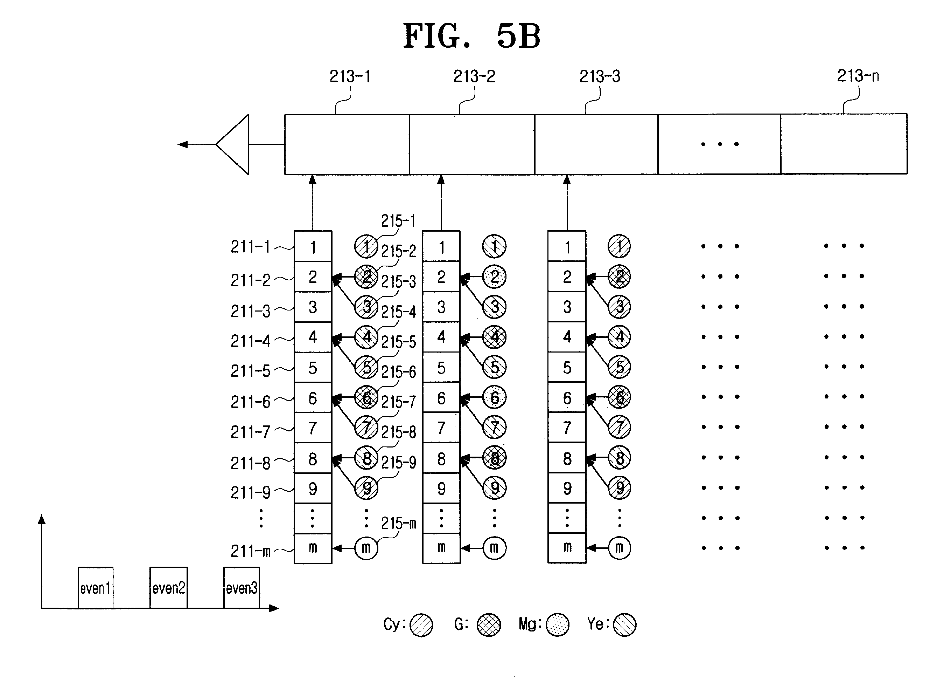

Referring to Figures 5A and 5B, pixel values, which are added at the adding unit 135 to form the odd field, are stored in odd CCDs 211-(2t-1) (t=1-m) of the vertical CCDs 211. And the pixel values, which are added at the adding unit 135 to form the even field, are stored in even CCDs 211-2t (t=1-m) of the vertical CCDs 211.

Next, the color-signal processing unit 140 brakes up color signals from the received interlaced scan image signals, and the encoder 160 unites the color signals from the color-signal processing 140 with the synchronizing signals from the control unit 150, so that the encoder 160 produces and outputs composite image signals, step S540.

The color-signal processing unit 140 breaks up color difference signals and luminance signals from the received interlaced scan image signals on the basis of color information included in the progressive scan image signals 215-1 through 215-m, which is obtained by a complementary color filter. And the color-signal processing unit 140 carries out a process of improving color reproduction characteristics of the received interlaced scan image signals. The encoder 160 unites the color difference signals and the luminance signals received from the color-signal processing unit 140 with the synchronizing signals received from the control unit 150, so that the encoder 160 produces and outputs composite image signals that meet an appropriate imaging standard. The imaging standard comprise an imaging norm, which is provided by standard bodies such as NTSC, PAL, HD, SD, an so on.

As apparent from the foregoing description, according to exemplary embodiments of the present invention, the monitoring camera and the scan-converting method thereof can convert the image signals obtained via a progressive scan method into image signals of an interlaced scan type and output them, thereby allowing an image signal apparatus, such as a camera, to be compatible with other interlaced scan type processing apparatuses, and improving image quality in other progressive scan type processing apparatuses.

Certain exemplary embodiments of the present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While the present invention has been particularly shown and described with reference to certain exemplary embodiments thereof, it will be understood by those of ordinary skill in the art that various changes in form and detail may be made therein without departing from scope of the present invention as defined by the appended claims.

## Claims

1. A camera, comprising:
photographing unit configured to capture image data and output the image data as a progressive scan signal,
a first storing unit (131) configured to store odd pixels of the progressive scan signal;
a second storing unit (133) configured to store even pixels of the progressive scan signal; and
an adding unit (135) configured to add odd pixels to even pixels read from the first and the second storing units (131, 133) and output an odd field and an even field of an interlaced scan signal.

2. The camera of claim 1, wherein the adding unit (135), when forming the odd field, reads each odd pixel from the first storing unit (131) prior to each even pixel from the second storing unit (133), and adds each odd pixel to each subsequently read even pixel, and when forming the even field, reads each even pixel from the second storing unit (133) prior to each odd pixel from the first storing unit (131), and odds each even pixel to each subsequently read odd pixel.

3. The camera of claim 1 or 2, further comprising a control unit (150) for generating at least one of a timing signal and a synchronizing signal for controlling the photographing unit.

4. A method for scan-converting an image signal, the method comprising:
storing odd pixels of a progressive scan image signal;
storing even pixels of the progressive scan image signal; and
adding the odd pixels and even pixels to form an odd field and an even field, to produce an interlaced scan signal.

5. The method of claim 4, wherein the adding the odd pixels and the even pixels comprises, when forming the odd field, reading each stored odd pixel prior to each stored even pixel, and adding each odd pixel to each subsequently read even pixel, and when forming the even field, reading each stored even pixel prior to each stored odd pixel, and adding each even pixel to each subsequently read odd pixel.

6. The method of claim 4 or 5, further comprising generating at least one of a timing signal and a synchronizing signal for controlling capturing of image data.

7. A scan-converting apparatus for scan-converting image signals, comprising:
a first storing unit (131) configured to store odd pixels of a progressive scan signal; a second storing unit (133) configured to store even pixels of the progressive scan signal; and
an adding unit (135) configured to add the odd pixels and the even pixels read from the first and the second storing units (131, 133) to form an odd field and an even field to produce an interlaced scan signal.

8. The apparatus of claim 7, wherein the adding unit (135), when forming the odd field, reads each odd pixel from the first storing unit (131) prior to each even pixel from the second storing unit (133), and adds each odd pixel to each subsequently read even pixel, and when forming the even field, reads each even pixel from the second storing unit (133) prior to each odd pixel from the first storing unit (131), and adds each even pixel to each subsequently read odd pixel.

9. The apparatus of claim 7 or 8, further comprising a control unit (150) for generating at least one of a timing signal and a synchronizing signal for controlling the scan-converting apparatus.

10. A method for forming an interlaced scan image signal from a progressive scan image signal, the method comprising:
decomposing a progressive scan image signal into odd and even pixels;
forming an odd field by adding the even pixels to the odd pixels; and
forming an even field by adding the odd pixels to the even pixels,
wherein the odd field and even field comprise an interlaced scan image signal.

11. The method of claim 10, further comprising:
decomposing the interlaced scan image signal by breaking up a color difference signal and a luminance signal on the basis of color information included in the progressive scan image signal obtained by a complementary color filter; and
encoding the color difference signal and luminance signal with a synchronizing signal to produce a composite image signal.

12. The method of claim 11 wherein the composite image signal comports with an imaging standard comprising national television system committee (NTSC), phase alternating line (PAL), high definition (HD), and standard definition (SD).

13. The method of claim 10, wherein the odd and even pixels are interspersed with each other in accordance with a selected pattern.

14. The method of claim 13, wherein the selected pattern comprises a selected number of consecutive pixels.

15. A computer readable medium having stored thereon instructions for carrying out the method according to any one of claims 4 to 6 or 10 to 14.
